# EUROPÄISCHE PATENTANMELDUNG

(11) **EP 1 245 332 A1**
(43) Veröffentlichungstag der Anmeldung: **02.10.2002**
(21) Anmeldenummer: 02006911.8
(22) Anmeldetag: 26.03.2002
(51) Int. Cl.: B23Q 39/02, B23Q 1/62, A61C 13/00

(54) **Fräs-/Schleifmaschine zur Herstellung von zahnmedizinischen Werkstücken**

(30) Priorität: 26.03.2001 DE 20105248 U
(71) Anmelder: KALTENBACH & VOIGT GmbH & Co., 88400 Biberach/Riss (DE)
(72) Erfinder: Bodenmiller, Anton, 88299 Leutkirch (DE)
(74) Vertreter: Schmidt-Evers, Jürgen, Dipl.-Ing.

(57) **Zusammenfassung**

Die Erfindung bezieht sich auf eine Fräs-/Schleifmaschine zur Herstellung von zahnmedizinischen oder zahntechnischen Werkstücken, mit einer Werkstückaufnahme (3) und einem Werkzeug (7), welches gegenüber einem in der Werkstückaufnahme (3) angeordneten Werkstück (1) linear entlang von drei senkrecht aufeinander stehenden Achsen (X, Y, Z) bewegt werden kann. Um eine Fräs-/Schleifmaschine zur hochgenauen und wirtschaftlichen Herstellung von medizinischen, zahnmedizinischen und zahntechnischen Prothetikteilen für den Medizintechniker, Zahnarzt, Zahnarzthelferin und den Zahntechniker direkt im medizinischen Labor, Praxis oder gewerblichen Labor zur Verfügung zu stellen, sind das Werkzeug (7) und die Werkstückaufnahme (3) jeweils drehbar und/oder schwenkbar angeordnet.

## Beschreibung

Die vorliegende Erfindung betrifft eine Fräs-/ Schleifmaschine zur Herstellung von Werkstücken aus dentalen Werkstoffen.

In der Medizintechnik, Zahnmedizin und Zahntechnik werden prothetische Teile aus hochwertigen Edelmetall-Legierungen, Kobalt-Chromlegierungen, Titan, Keramiken und Kunststoff hergestellt. Die Fertigung solcher prothetischer Arbeiten erfolgt dabei überwiegend im Gießverfahren. Aus Gründen der Biokompatibilität werden inzwischen allerdings bei gegebener Indikation Prothetikgerüste auch im Galvano-Verfahren oder als Keramikkäppchen hergestellt und dann zusätzlich keramisch verblendet.

Die Fertigung von Zahnersatz mittels CAD/CAM-Systemen wird inzwischen zwar vereinzelt angewandt, konnte sich aber bisher wegen verschiedener technischer Probleme, für den Zahntechniker schwierig zu handhabender Systemkomponenten und der hohen Systemkosten noch nicht in dem erwarteten Umfang durchsetzen. Realisiert wird dabei hauptsächlich das Herausschleifen von Inlays und Onlays aus Glaskeramikblöcken.

Ein CAD/CAM-System zur Herstellung von Keramikkäppchen wurde zwischenzeitlich unter der Bezeichnung Lava von der Firma Espe Dental AG entwickelt. Dabei wird zunächst ein Modell des Zahnstumpfes dreidimensional vermessen und computergesteuert die Struktur eines geeigneten Käppchens berechnet. Anhand dieser Daten wird ein Fräsprogramm für eine Fräsmaschine berechnet, welche aus einem Grünkörper einen Rohling der gewünschten Struktur herausfräst. Bei diesem Grünkörper handelt es sich um vorgesintertes Zirkonoxid, welches im Vergleich zu durchgesintertem Material wesentlich weicher ist. Der auf diese Weise hergestellte Rohling wird anschließend zu einem hochfesten Keramikwerkstück gesintert.

Ein weiteres Verfahren zur Herstellung medizinischer, zahnmedizinischer, zahntechnischer und technischer Teile aus Keramik ist in der DE 199 30 564 A1 der Anmelderin beschrieben. Auch hier wird anhand eines optisch vermessenen Modells ein Fräsprogramm zum Herausarbeiten des Werkstücks aus einem Rohling berechnet. Der Rohling besteht dabei aus einem pulverförmigen Keramik-Rohmaterial, das zu einem blockförmigen Grünling gepreßt wird. Dies hat den Vorteil, daß im Vergleich zu bereits gesinterten Keramikblöcken wesentlich leichter, schneller und mit weniger Abrieb an den Werkzeugen gearbeitet werden kann. Darüber hinaus kann überschüssiges Rohmaterial, welches beim Bearbeiten des Keramikgrünlings abgefräst wird, zurückgewonnen und nochmals verwendet werden. Als Rohmaterial werden beispielsweise die bereits bekannten und vielfach verwendeten Keramiken Zirkonoxid (ZrO₂) oder Aluminiumoxid (Al₂O₃) verwendet. Besonders vorteilhaft ist die Verwendung einer ZrSiO₄-Keramik, da dieses beim Sintern nur wenig oder gar nicht schrumpft.

Die derzeit realisierten Bearbeitungsmaschinen zum Fräsen von Keramikwerkstücken sind in ihrer Baustruktur an einer klassischen 3-Achs-Fräsmaschine orientiert und sind deshalb nur eingeschränkt für die anspruchsvolle Freiformflächen-Bearbeitung der prothetischen Teile geeignet. Die bisherigen Fräs-/ bzw. Schleifmaschinen stellen daher nach Ansicht der Benutzer z.Zt. einen der kritischsten Faktor in dem Fertigungsprozeß zur Herstellung von Keramikteilen dar.

Ein weiteres Problem stellt sich bei der Separierung des Prothetikteiles vom Restteil des ursprünglichen Materialblockes. Bei diesem manuellen Trenn- und Schleifvorgang können sowohl Geometriefehler als auch Materialausbrüche bei Keramiken entstehen, so daß das teuer gefertigte Teil nicht mehr brauchbar ist. Bei einem bekannten Frässystem muß ferner das Werkstückteil zur Bearbeitung der zweiten Seite manuell um 180° gedreht, d.h. umgespannt werden. Dieses Umsetzen des Werkstückteiles im Arbeitsraum der Maschine ist mit Genauigkeitsrisiken verbunden und setzt hochpräzise und damit teure Maschinenaufspann- und Wechselsysteme voraus. Zusätzlich ist ein spezifisches Können und sauberes Arbeiten des Zahntechnikers unabdingbar.

Die vorliegende Erfindung befaßt sich daher mit der Aufgabe, eine Fräs/Schleifmaschine zur hochgenauen und wirtschaftlichen Herstellung von medizinischen, zahnmedizinischen und zahntechnischen Prothetikteilen für den Medizintechniker, Zahnarzt, Zahnarzthelferin und den Zahntechniker direkt im medizinischen Labor, Praxis oder gewerblichen Labor zur Verfügung zu stellen.

Diese Aufgabe wird durch eine Fräs-/Schleifmaschine, welche die Merkmale des Anspruchs 1 aufweist, gelöst. Diese zeichnet sich dadurch aus, daß neben einer linearen Bewegung entlang von drei aufeinanderstehenden Achsen auch ein Verdrehen und/oder Verschwenken des Werkzeugs und der Werkstückaufnahme möglich ist. Während der Bearbeitung kann dann eine simultane Steuerung dieser 5 Bewegungsachsen erfolgen, so daß auch sehr komplexe und aufwendige Strukturen erarbeitet werden können.

Weiterbildungen der Erfindung sind Gegenstand der Unteransprüche. Beispielsweise kann die Fräs-/Schleifmaschine eine Doppelspindel aufweisen, an deren Enden zwei verschiedene Werkzeuge, z.B. ein Schruppwerkzeug und ein Schlichtwerkzeug angeordnet sind. Die Doppelspindel kann dann beispielsweise allseitig um 180° gedreht werden, um eines der beiden Werkzeuge zur Bearbeitung des Werkstückes heranzuziehen. Auch die Werkstückaufnahme kann allseitig um 180° gedreht werden, so daß ohne ein Umspannen von einer Bearbeitung der Primärseite auf eine Bearbeitung der Sekundärseite gewechselt werden kann. Darüber hinaus kann eine Zusatzeinrichtung vorgesehen sein, durch welche die Oberfläche des Werkstücks nachbearbeitet werden kann.

Die erfindungsgemäße Fräs-/Schleifmaschine ist insbesondere zur Bearbeitung von Keramikmaterialien zur Herstellung zahnmedizinischer oder zahntechnischer Werkstücke geeignet, es können allerdings auch andere Materialien bearbeitet werden.

Im folgenden soll die Erfindung anhand der beiliegenden Zeichnungen näher erläutert werden. Es zeigen:
- Fig. 1: eine erfindungsgemäße Fräs-/Schleifmaschine in Frontansicht;
- Fig. 2: die in Fig. 1 dargestellte Fräs-/Schleifmaschine in seitlicher Ansicht;
- Fig. 3: eine Werkstückaufnahme in Aufsicht;
- Fig. 4: die Werkstückaufnahme mit einem darin eingesetzten Keramik-Rohling im Schnitt;
- Fig. 5: die Werkstückaufnahme mit einem bereits teilweise bearbeiteten Rohling;
- Fig. 6: eine erste vorteilhafte Weiterbildung der erfindungsgemäßen Fräs/Schleifmaschine in seitlicher Ansicht; und
- Fig. 7: eine zweite vorteilhafte Weiterbildung der Fräs-/Schleifmaschine.

Die Funktion der erfindungsgemäßen Fräs-/Schleifmaschine soll im folgenden anhand der Beschreibung eines Verfahrens zur Herstellung einer Keramikkrone erläutert werden. Es ist allerdings zu bemerken, daß auch die Herstellung von Werkstücken aus anderen Materialien möglich ist.

Zunächst wird von dem Zahntechniker auf der Basis eines Abdruckes als Grundlage für eine prothetische Arbeit ein Sägeschnittmodell aus Gips oder einem anderen geeigneten Modellwerkstoff gefertigt. Der zur späteren Befestigung des Werkstückes auf dem Zahnstumpf erforderliche Zementspalt kann beispielsweise über eine entsprechende Distanzlackierung auf der Stumpfpräparation eingestellt werden.

In einer Meßvorrichtung wird der Stumpf dann beispielsweise mechanisch, optisch oder nach einem anderen Verfahren dreidimensional vermessen. Anschließend wird die Krone aus Wachs oder einem anderen Modellierstoff modelliert und auf den Stumpf aufgesetzt. Der Stumpf mit der darauf aufgesetzten Krone wird dann ein weiteres Mal vermessen, so daß die exakte Struktur der Krone berechnet werden kann. Alternativ dazu könnte das Keramikteil auch an einem CAD-3D-System konstruiert werden.

Über eine CAM-Software werden im folgenden die Fräsbahnen zum Herausarbeiten der Kroneninnenseite und der Kronenaußenseite generiert, auf die Maschinenstruktur bezogen umgerechnet und als Fräsprogramm in die Steuerung der erfindungsgemäßen Fräs-/Schleimaschine geladen.

Wird als Ausgangsmaterial ein Keramikgrünling oder -weißling verwendet, der beim Sintern schwindet, muß beim Berechnen des Fräsprogrammes dieser Sinterschwund durch einen Korrekturfaktor berücksichtigt werden. Dies ist beispielsweise dann der Fall, wenn als Rohmaterial Zirkonoxid (ZrO₂) oder Aluminiumoxid (Al₂O₃) verwendet wird. Vorzugsweise werden allerdings ZrSO₄-Keramiken verwendet, da diese in einem Reaktionssinterverfahren hergestellten Keramiken den Vorteil haben, daß bei einem geeigneten Ausgangsmaterial die Struktur der Werkstücke vor und nach dem Sintern identisch ist. Das Berechnen des Fräsprogrammes wird dadurch wesentlich vereinfacht.

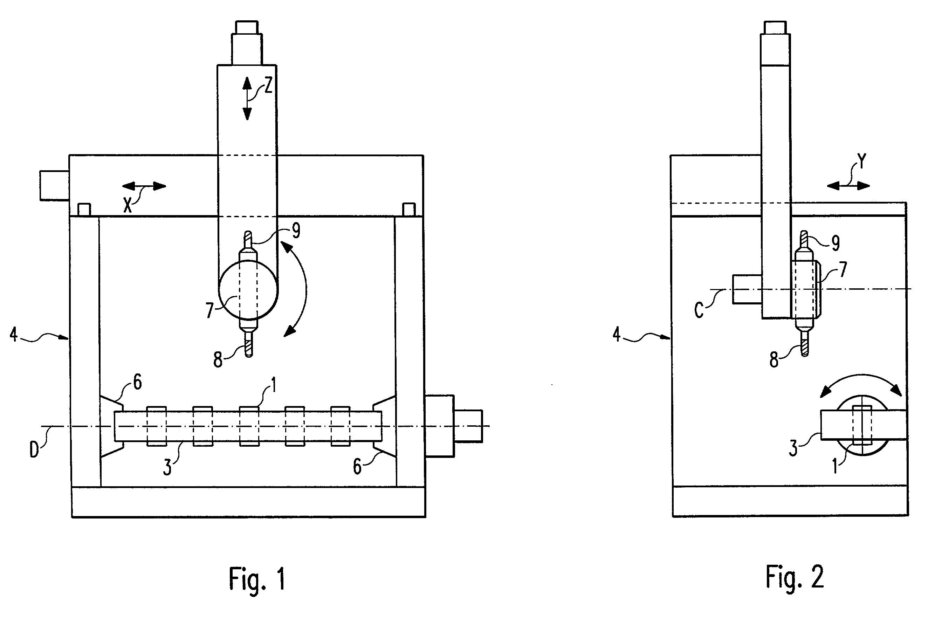

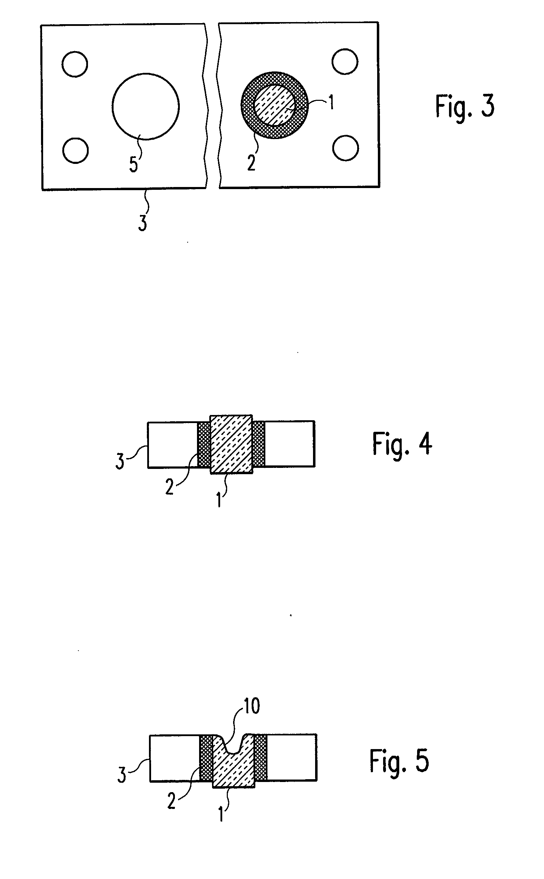

In dem darauffolgenden Arbeitsschritt wird der durch Pressen des Keramik-Rohmaterials gebildete Keramikgrünling 1 in die Werkstückaufnahme 3 der in den Figuren 1 und 2 gezeigten Fräs-/Schleifmaschine 4 eingesetzt. Die in den Figuren 3 und 4 in Aufsicht und im Schnitt dargestellte Werkstückaufnahme 3 besteht aus einer länglichen Leiste, welche in ihrer Längsachse mehrere Durchbrüche 5 in Form von Bohrungen aufweist. Die Befestigung des Rohlings 1 in einer Bohrung 5 erfolgt dabei durch die Einbettung mit einem gießbaren Material 2, welches den Rohling 1 sicher, formschlüssig und schonend fixiert. Je nach zu bearbeitendem Werkstoff bzw. nach dem Bearbeitungsverfahren können dabei unterschiedliche Einbettstoffe verwendet werden. Bei der Herstellung von Keramikteilen beispielsweise wird als Einbettmaterial bevorzugt Fräswachs verwendet.

Nach dem Einsetzen der Werkstückaufnahme 3 in die Halterung 6 der Fräs/Schleifmaschine 4 wird der Fräs- bzw. Schleifvorgang gestartet. Die Bearbeitung der Primärseite (beispielsweise der Kroneninnenseite) des Werkstückes erfolgt dabei vollautomatisch in zwei unmittelbar aufeinanderfolgenden Schritten mit fünf simultan gesteuerten Achsen. Hierzu kann das Werkzeug 7 entlang von drei aufeinander senkrecht stehenden Achsen X,Y,Z linear bewegt werden, zusätzlich können das Werkzeug 7 um die Achse C und die Werkstückaufnahme 3 um die Achse D verdreht und/oder verschwenkt werden. Diese zusätzlichen Schwenkachsen C und D sind senkrecht zueinander und jeweils parallel zu einer der Linearachsen X, Y oder Z angeordnet.

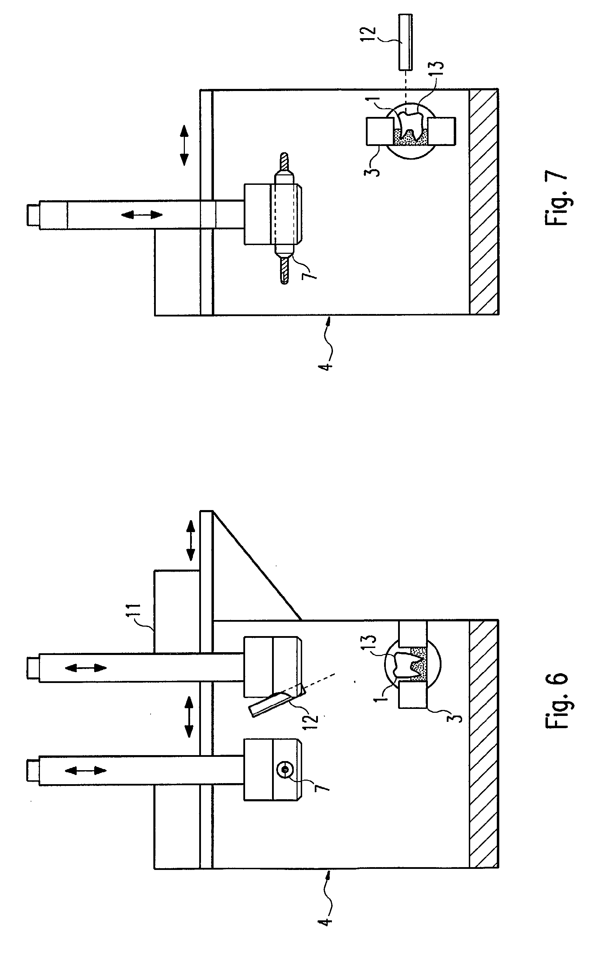

Der erste Bearbeitungsschritt zur Herausarbeitung der Primärseite besteht aus Schruppen, der zweite aus Schlichten. Das Werkzeug besteht daher aus einer Fräs-/Schleif-Doppelspindel 7, welche auf der einen Seite mit einem Schruppwerkzeug 8 und auf der anderen Seite mit einem Schlichtwerkzeug 9 bestückt ist. Für den Wechsel von dem ersten auf den zweiten Arbeitsschritt wird die Doppelspindel 7 um 180° in ihre neue Arbeitsposition geschwenkt. Während der Bearbeitung des Rohlings 7 kann dann die Spindel 7 aus ihrer Grundposition heraus zusätzlich um bis zu 45° in beide Seiten geschwenkt bzw. nachgeführt werden, so daß auch sehr komplexe Strukturen an dem Werkstück heraus gearbeitet werden können. Fig. 5 zeigt dabei den in die Werkstückaufnahme 3 eingebetteten Keramikrohling 1 zu einem Zeitpunkt, zu dem bereits die Kroneninnenseite 10 heraus gearbeitet wurde.

Nach dem Ende der automatischen Primärseitenbearbeitung wird diese wieder mit der Einbettmasse vergossen, wobei die Werkstückaufnahme 3 nicht aus ihrer Halterung 6 der Maschine 4 herausgenommen wird, so daß keine Umspannfehler und andere Ungenauigkeiten entstehen. Dieses Einbetten kann insbesondere vollautomatisch durch eine - nicht dargestellte - Einbettvorrichtung erfolgen. Anschließend wird die Werkstückaufnahme 3 um die Achse D um 180° in die zweite Arbeitsposition geschwenkt, so daß die Sekundärseite des Keramikrohlings 1 genau repositioniert in die neue Fräsposition kommt.

Wie zuvor beschrieben wird nun auch Kronenaußenseite vollautomatisch vom Kronenrand bis zur Okklusalfläche geschruppt und geschlichtet. Dabei kommt insbesondere auch die D-Rotationsachse zum Einsatz, um die die Aufnahme 3 simultan verschwenkt wird. Durch das zuvorige Einbetten der Primärseite wird auch bei diesem Fräsvorgang der Grünling sicher gehalten und an kritischen Stellen abgestützt, so daß keine Materialausbrüche auftreten.

Nach Beendigung des Fertigungsprozesses in der Fräs-/Schleifmaschine 4 kann dann die Werkstückaufnahme 3 ausgespannt und das fertig bearbeitete Werkstück ausgebettet werden. Das Ausbettverfahren erfolgt dabei je nach Art des verwendeten Einbettmaterials. Wird beispielsweise Fräswachs verwendet, so kann der Ausbettvorgang mit Hilfe eines Heißluftföhns oder in einem speziellen Auswachsgerät erfolgen. Auch hier besteht die Möglichkeit, das abgeschmolzene Fräswachs wieder zu verwenden. Das auf diese Weise hergestellte prothetische Werkstück kann dann unmittelbar ohne Nacharbeiten an seiner Kontur fertig gestellt, bzw. gesintert werden.

Wird hingegen zusätzlich eine Mikrostrukturierung z.B. der Kaufläche gewünscht, schließt sich ein weiterer Bearbeitungsschritt an, der in den Figuren 6 und 7 dargestellt ist, die jeweils eine vorteilhafte Weiterbildung der Fräs-/Schleifmaschine zeigen.

In Fig. 6 weist die Fräs-/Schleifmaschine 4 neben der Spindeleinheit 7 eine Zusatzeinrichtung 11 zur Nachbearbeitung der Kaufläche 13 auf. Die Nachbearbeitung erfolgt dabei - wie dargestellt - mit Hilfe eines Lasers 12. Alternativ dazu könnten zur Nachbearbeitung auch andere Techniken, wie z.B. Ultraschallerosion verwendet werden. Der Vorteil besteht dabei darin, daß der Grünling 1 vor dieser Bearbeitung nicht aus- bzw. umgespannt werden muß. Ferner kann die Mikrobearbeitung ebenfalls wie das zuvorige Fräsen 5-achsig erfolgen.

Bei der in Fig. 7 dargestellten Alternative wird die Werkstückaufnahme 3 mit dem darin angeordneten Werkstück 1 um 90° gedreht, so daß die Nachbearbeitung durch ein seitlich heran geführtes Gerät, im vorliegenden Fall wiederum durch einen Laser 12, durchgeführt werden kann. Ein weitere Ergänzung der Fräs-/Schleifmaschine kann dadurch erfolgen, daß eine Vorrichtung vorgesehen ist, durch welche die Doppelspindel 7 gekühlt wird. Der Verschleiß der Werkzeuge zum Bearbeiten der Werkstücke wird hierdurch deutlich reduziert.

Insgesamt können somit mit der erfindungsgemäßen Fräs-/Schleifmaschine in der Medizin, Zahnmedizin und Zahntechnik Implantatteile, Inlays, Teilkronen, Kronen, Brücken, Prothesenbasen und Hilfsteile genau und mit hoher, dem Einsatzzweck angepaßter mechanischer Festigkeit und verschiedensten Dentalwerkstoffen wirtschaftlich hergestellt werden. Als weiterer Vorteil der vorliegenden Erfindung ist anzusehen, daß der Fertiger der Prothetikteile seine bisherigen und ihm in der Verarbeitung bekannten Hilfswerkstoffe weiterhin verwenden kann. Die Erfindung ermöglicht außerdem eine flexible Ausnutzung der Maschinenkapazität durch die variable Belegungsmöglichkeit der Maschine bezüglich Werkstück-Stückzahlen und Werkstück-Abmessungen. Die Folge davon ist eine wesentliche Reduzierung der Nebenzeiten sowie eine bessere Ausnutzung der Maschinenkapazität und eine Erhöhung der Prozeßsicherheit. Die Anwendung der erfindungsgemäßen Fräs-/Schleifmaschine ist dabei auch nicht auf die Bearbeitung von Keramiken beschränkt, vielmehr können auch alle anderen Dentalwerkstoffe bearbeitet werden, wobei aufgrund der 5-achsigen Steuerung auch die Herausarbeitung sehr komplexer Strukturen möglich ist.

## Patentansprüche

1. Fräs-/Schleifmaschine zur Herstellung von zahnmedizinischen oder zahntechnischen Werkstücken, mit einer Werkstückaufnahme (3) und einem Werkzeug (7), welches gegenüber einem in der Werkstückaufnahme (3) angeordneten Werkstück (1) linear entlang von drei senkrecht aufeinander stehenden Achsen (X, Y, Z) bewegt werden kann,
**dadurch gekennzeichnet,**
**daß** das Werkzeug (7) und die Werkstückaufnahme (3) jeweils drehbar und/oder schwenkbar sind.

2. Fräs-/Schleifmaschine nach Anspruch 1,
**dadurch gekennzeichnet,**
**daß** die Schwenkachsen (C, D) des Werkzeugs (7) und der Werkstückaufnahme (3) senkrecht zueinander angeordnet sind.

3. Fräs-/Schleifmaschine nach Anspruch 2,
**dadurch gekennzeichnet,**
**daß** die Schwenkachsen (C, D) des Werkzeugs (7) und der Werkstückaufnahme (3) jeweils parallel zu einer der Linearachsen (X, Y, Z) angeordnet sind.

4. Fräs-/Schleifmaschine nach einem der vorherigen Ansprüche,
**dadurch gekennzeichnet,**
**daß** die Werkstückaufnahme (3) eine durchgehende Bohrung (5) zur Aufnahme des Werkstücks (1) aufweist, wobei die Werkstückaufnahme (3) allseitig drehbar ist.

5. Fräs-/Schleifmaschine nach Anspruch 4,
**dadurch gekennzeichnet,**
**daß** die Werkstückaufnahme (3) allseitig um 180° drehbar ist.

6. Fräs-/Schleifmaschine nach einem der vorherigen Ansprüche,
**dadurch gekennzeichnet,**
**daß** diese eine Doppelspindel (7) aufweist, an deren beiden Enden zwei verschiedene Werkzeuge (8, 9) angeordnet sind, wobei die Arbeitsposition der Doppelspindel (7) allseitig drehbar ist.

7. Fräs-/Schleifmaschine nach Anspruch 6,
**dadurch gekennzeichnet,**
**daß** die Arbeitsposition der Doppelspindel (7) allseitig um 180° drehbar ist.

8. Fräs-/Schleifmaschine nach Anspruch 6 oder 7,
**dadurch gekennzeichnet,**
**daß** an den Enden der Doppelspindel (7) ein Schruppwerkzeug (8) und ein Schlichtwerkzeug (9) angeordnet sind.

9. Fräs-/Schleifmaschine nach einem der vorherigen Ansprüche,
**dadurch gekennzeichnet,**
**daß** die Werkstückaufnahme (3) mehrere entlang ihrer Längsachse angeordnete Bohrungen (5) zur Aufnahme von Werkstücken (1) aufweist.

10. Fräs-/Schleifmaschine nach einem der vorherigen Ansprüche,
**dadurch gekennzeichnet,**
**daß** diese eine Zusatzeinrichtung (12) zur Nachbearbeitung der Werkstück-Oberfläche (13) aufweist.

11. Fräs-/Schleifmaschine nach Anspruch 10,
**dadurch gekennzeichnet,**
**daß** die Zusatzeinrichtung (12) mit den gleichen Freiheitsgraden wie das Werkzeug (7) verstellbar ist.

12. Fräs-/Schleifmaschine nach Anspruch 10 oder 11,
**dadurch gekennzeichnet,**
**daß** die Zusatzeinrichtung ein Laser (12) ist.

13. Fräs-/Schleifmaschine nach einem der vorherigen Ansprüche,
**dadurch gekennzeichnet,**
**daß** diese eine Einbettvorrichtung zum automatischen Einbetten des Werkstücks (1) in die Werkstückaufnahme (3) aufweist.

14. Fräs-/Schleifmaschine nach einem der vorherigen Ansprüche,
**dadurch gekennzeichnet,**
**daß** diese eine Vorrichtung zur Kühlung des Werkzeugs (7) aufweist.
